# EUROPEAN PATENT APPLICATION

(11) **EP 2 735 655 A1**
(43) Date of publication of application: **28.05.2014**
(21) Application number: 11869743.2
(22) Date of filing: 19.07.2011
(51) Int. Cl.: E02F 9/12, E02F 9/00

(54) **SWIVEL JOINT FOR CONSTRUCTION MACHINERY**

(71) Applicant: Volvo Construction Equipment AB, 631 85 Eskilstuna (SE)
(72) Inventor: CHUNG, Yun-Hyun, Changwon-si Gyeongsangnam-do 642-940 (KR)
(74) Representative: Zimmermann, Tankred Klaus
(86) International application number: PCT/KR2011/005279
(87) International publication number: WO 2013/012105

(57) **Abstract**

A swivel joint for a construction machine is disclosed, which is used to connect hydraulic pipes which supply a flow rate from a hydraulic pump mounted on an upper swing structure that swivels against a lower driving structure to components, such as a traveling motor and a steering cylinder, mounted on the lower driving structure. The swivel joint includes a hub mounted on any one of the lower driving structure and the upper swing structure and provided with a hydraulic fluid movement port formed thereon, a shaft mounted on the other of the lower driving structure and the upper swing structure and rotatably coupled to the hub, the shaft having a hydraulic fluid movement path formed in an axis direction to communicate with the port of the hub, and a planar thrust bearing mounted on a cover that is integrally fixed to the hub on an upper side of the shaft to rotate in a body with the hub when the upper swing structure swivels against the lower driving structure and to be in frictional contact with an upper surface of the shaft to rotatably support the shaft in the axis direction.

## Description

### TECHNICAL FIELD

The present invention relates to a swivel joint for a construction machine. More particularly, the present invention relates to a swivel joint for a construction machine, which is used to connect hydraulic pipes for supplying hydraulic fluid from a hydraulic pump mounted on an upper swing structure that swivels against a lower driving structure to components, such as a traveling motor and a steering cylinder, mounted on the lower driving structure.

### BACKGROUND ART

Generally, in a construction machine, such as an excavator, a cab, an engine room, and a working device, such as a boom, are mounted on an upper swing structure that swivels against a lower driving structure. Further, a traveling device including left and right traveling motors is mounted on the lower driving structure, and in the case of a wheel type excavator, various components, such as an axle locking device, a dozer blade cylinder, and a steering cylinder, are additionally mounted on the lower driving structure. A swivel joint is used to prevent hydraulic pipes, which supply hydraulic fluid from a hydraulic pump that is mounted on the upper swing structure to respective components mounted on the lower driving structure, signal cables, and power cables from being twisted during a swing operation of the upper swing structure.

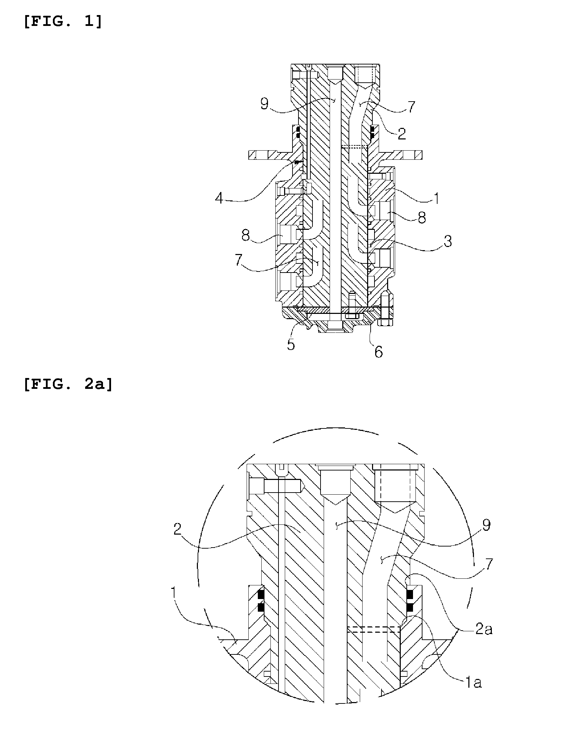

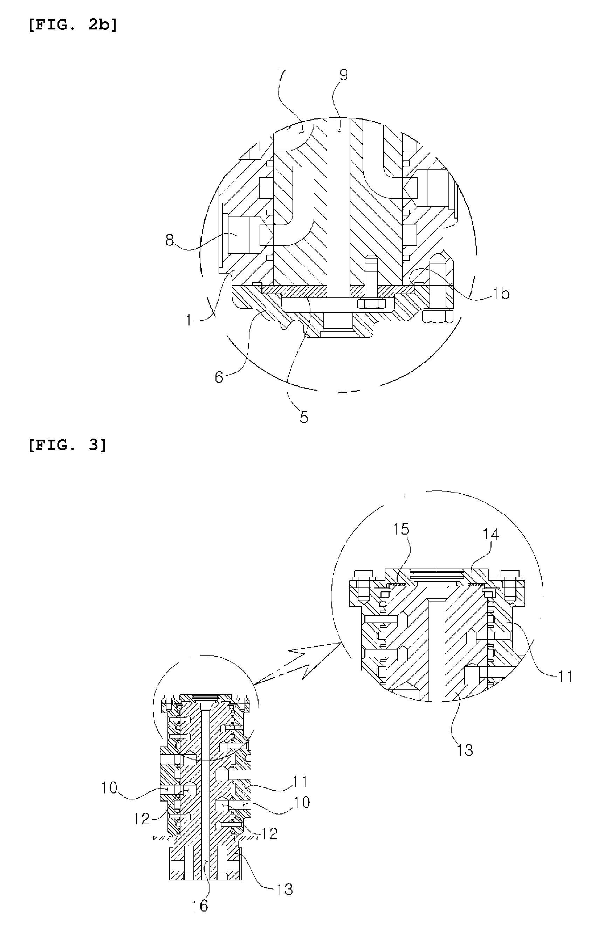

As illustrated in FIGS. 1, 2A and 2B, a swivel joint for a construction machine in the related art includes a hub 1 fixed to one side of an upper swing structure and a lower driving structure; a shaft 2 fixed to one side of the upper swing structure and the lower driving structure, to which the hub 1 is not fixed, to continuously supply hydraulic fluid in a state where hydraulic pipes are not twisted regardless of a swing operation of the upper swing structure; a sealing material 3 suppressing leakage of the hydraulic fluid between the hydraulic pipes that are connected from the upper swing structure side to the lower driving structure side to form a flow path; a side bearing 4 forming a contact guide when the hub 1 and the shaft 2 are relatively rotated; a spacer 5 preventing secession of the hub 1 and the shaft 2 and serving as a rotary contact guide; and a cover 6 forming a space for a drain or the like through separation from an outside.

In the drawing, the reference numeral 7 denotes a hydraulic fluid movement path formed in an axis direction (length direction) of the shaft 2, 8 denotes a hydraulic fluid movement port formed in the hub 1 to communicate with the hydraulic fluid movement path 7, and 9 denotes a path for hydraulic fluid drainage or electric wiring that is penetratingly formed in the axis direction of the shaft 2.

In the swivel joint as constructed above, when the hub 1 and the shaft 2 are relatively rotated, direct local friction surfaces 1a and 2a of the hub 1 and the shaft 2 are determined through dimension control of rotational friction regions (see FIG. 2A), or a rotational friction surface 1b is formed by a separate component, such as a spacer 5, that is integrally fastened to the shaft 2 (see FIG. 2B).

Although not illustrated in the drawing, as another application example, a steel washer is mounted on a region, on which rotational friction of the hub 1 and the shaft 2 is expected, to be used as a low-rotation friction material using drain oil.

In the case where the rotational friction regions of the hub 1 and the shaft 2 of the swivel joint are supported as described above, the shape tolerance of the hub 1 or the shaft 2 may secede from an error range, or roughness may exceed a prescribed value. Further, abnormal friction may occur on the contact region, or abrupt eccentricity may occur due to an external force. In this case, metal-to-metal contact phenomenon may become severe and metallic foreign substances may be generated to cause the sealing material 3 to be severely damaged. Further, since vibration and noise are generated due to non-uniform rotation of the hub 1 and the shaft 2, trouble may occur in the overall performance of the equipment.

Due to this, foreign substances are interposed in a main control valve MCV and pipes of a hydraulic system of the equipment, and thus the performance of the hydraulic system may deteriorate. Further, the life span of the components may be shortened due to inflow of metallic foreign substances inside the swivel joint. If the sealing material between the flow paths is damaged, the hydraulic fluid may be transferred to a neighboring port, and thus the safety of the equipment may deteriorate due to malfunction of the equipment.

### DISCLOSURE

### TECHNICAL PROBLEM

Therefore, the present invention has been made to solve the above-mentioned problems occurring in the related art, and one embodiment of the present invention is related to a swivel joint for a construction machine, which can secure stable rotation and increase durability through rotatable support of rotational friction regions by means of a planar thrust bearing when a shaft and a hub, which constitute the swivel joint, are relatively rotated.

### TECHNICAL SOLUTION

In accordance with a first aspect of the present invention, there is provided a swivel joint for a construction machine that is used to connect hydraulic pipes which supply a flow rate from a hydraulic pump mounted on an upper swing structure that swivels against a lower driving structure to components, such as a traveling motor, an axle locking device, a dozer blade cylinder, and a steering cylinder, mounted on the lower driving structure, the swivel joint including a hub mounted on any one of the lower driving structure and the upper swing structure and provided with a hydraulic fluid movement port formed thereon; a shaft mounted on the other of the lower driving structure and the upper swing structure and rotatably coupled to the hub, the shaft having a hydraulic fluid movement path formed in an axis direction to communicate with the port of the hub; and a planar thrust bearing mounted on a cover that is integrally fixed to the hub on an upper side of the shaft to rotate in a body with the hub when the upper swing structure swivels against the lower driving structure and to be in frictional contact with an upper surface of the shaft to rotatably support the shaft in the axis direction.

In accordance with a second aspect of the present invention, there is provided a swivel joint for a construction machine that is used to connect hydraulic pipes which supply a flow rate from a hydraulic pump mounted on an upper swing structure that swivels against a lower driving structure to various kinds of components, such as a traveling motor and a steering cylinder, mounted on the lower driving structure, the swivel joint including a hub mounted on any one of the lower driving structure and the upper swing structure and provided with a hydraulic fluid movement port formed thereon; a shaft mounted on the other of the lower driving structure and the upper swing structure and rotatably coupled to the hub, the shaft having a hydraulic fluid movement path formed in an axis direction to communicate with the port of the hub; and a planar thrust bearing mounted on the hub so as to be in frictional contact with a plate that is integrally fixed to a lower side of the shaft and to rotatably support the hub in the axis direction when the upper swing structure swivels against the lower driving structure.

Preferably, the planar thrust bearing may be formed of an oil-impregnated sintered metal material.

The planar thrust bearing may be formed of an oil-impregnated plastic material.

The planar thrust bearing may be formed of a bronze metal material.

The planar thrust bearing may be formed of a combination of a bronze metal material and a graphite material.

### ADVANTAGEOUS EFFECT

The swivel joint for a construction machine according to the aspects of the present invention as configured above has the following advantages.

When the shaft and the hub constituting the swivel joint are relatively rotated, the stable rotation thereof can be secured even if partial abnormal contact is made or even under unstable working conditions. Further, even in the case where the equipment is used for a long time, noise occurrence due to direct frictional contact between the metals is suppressed, and thus the durability of the swivel joint can be increased.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a view illustrating a main part of a swivel joint for a construction machine in the related art;
Figs. 2A and 2B are enlarged views of rotational friction regions of a shaft and a hub illustrated in Fig. 1;
Fig. 3 is a view illustrating a main part of a swivel joint for a construction machine according to a first embodiment of the present invention; and
Fig. 4 is a view illustrating a main part of a swivel joint for a construction machine according to a second embodiment of the present invention.

### * Description of Reference Numerals in the Drawing

10: hydraulic fluid movement port
11: hub
12: hydraulic fluid movement path
13: shaft
14: cover
15, 18: planar thrust bearing
16: path
17: plate

### BEST MODE

Hereinafter, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

According to a first embodiment of the present invention as illustrated in Fig. 3, a swivel joint for a construction machine that is used to connect hydraulic pipes which supply a flow rate from a hydraulic pump mounted on an upper swing structure that swivels against a lower driving structure to components, such as a traveling motor and a steering cylinder, mounted on the lower driving structure, includes a hub 11 mounted on any one of the lower driving structure and the upper swing structure (e.g., the upper swing structure) and provided with a hydraulic fluid movement port 10 formed thereon; a shaft 13 mounted on the other of the lower driving structure and the upper swing structure (e.g., the lower driving structure) and rotatably coupled to the hub 11, the shaft 13 having a hydraulic fluid movement path 12 formed in an axis direction to communicate with the port 10 of the hub 11; and a planar thrust bearing 15 mounted in a seating groove formed on a cover 14 that is integrally fixed to the hub 11 on an upper side of the shaft 13 to rotate in a body with the hub 11 when the upper swing structure swivels against the lower driving structure and to be in frictional contact with an upper surface of the shaft 13 to rotatably support the shaft 13 in the axis direction.

In this case, inlet sides of the hydraulic fluid movement path 12 formed in the axis direction of the shaft 13 are opened on a bottom surface of the shaft 13, and the hydraulic fluid movement port 10 that is formed at an interval in upper and lower directions of the hub 11 is connected to a flow control valve (e.g., MCV) through a hydraulic pipe (not illustrated).

The planar thrust bearing is formed of an oil-impregnated sintered metal material to have self-lubrication.

The planar thrust bearing is formed of an oil-impregnated plastic material to have self-lubrication.

The planar thrust bearing is formed of a bronze metal material to have self-lubrication.

The planar thrust bearing is formed of a combination of a bronze metal material and a graphite material to have self-lubrication.

Further, the planar thrust bearing may be formed of a metal material, a non-metal material, or a low friction material having self-lubrication, which can rotatably support the hub 11 or the shaft 13, which are relatively rotated, in the axis direction.

In the drawing, the reference numeral 16 denotes a path for hydraulic fluid drainage or electrical wiring, which is penetratingly formed in the axis direction of the shaft 13.

Hereinafter, a use example of a swivel joint for a construction machine according to a first embodiment of the present invention will be described in detail with reference to the accompanying drawings.

As shown in Fig. 3, the hub 11 and the shaft 13, which constitute the swivel joint and perform relative rotation, are mounted on the upper swing structure and the lower driving structure of the excavator. Through this, when the upper swing structure swings against the lower driving structure through driving of a swing device (not illustrated), the hub 11 and the shaft 13 are relatively rotated, and thus the planar thrust bearing 15 mounted on the cover 14 is rotated in a body with the hub 11. In this case, the hub 11 is rotatably supported in the axis direction by the planar thrust bearing 15 mounted on the cover 14 to come in rotational friction contact with an upper surface of the shaft 13.

On the other hand, since the planar thrust bearing 15 is formed of an oil-impregnated sintered metal material to have self-lubrication, stable rotation and low-vibration and low-noise performance can be secured even under relatively unstable working conditions. Further, even in the case where the equipment is used for a long time, noise occurrence due to direct frictional contact between the metals is suppressed, and thus the durability of the swivel joint can be increased to heighten the operating ratio of the equipment.

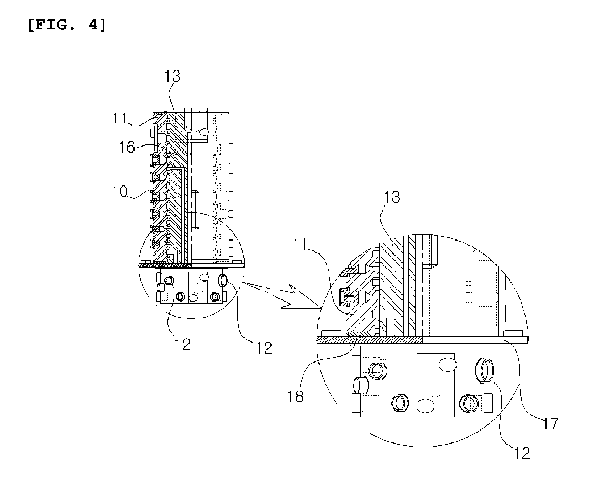

According to a second embodiment of the present invention as illustrated in Fig. 4, a swivel joint for a construction machine that is used to connect hydraulic pipes which supply a flow rate from a hydraulic pump mounted on an upper swing structure that swivels against a lower driving structure to components, such as a traveling motor and a steering cylinder, mounted on the lower driving structure, includes a hub 11 mounted on any one of the lower driving structure and the upper swing structure (e.g., the upper swing structure) and provided with a hydraulic fluid movement port 10 formed thereon; a shaft 13 mounted on the other of the lower driving structure and the upper swing structure (e.g., the lower driving structure) and rotatably coupled to the hub 11, the shaft 13 having a hydraulic fluid movement path 12 formed in an axis direction to communicate with the port 10 of the hub 11; and a planar thrust bearing 18 mounted in a seating groove formed on a bottom surface of the hub 11 so as to be in frictional contact with a plate 17 that is integrally fixed to a lower side of the shaft 13 and to rotatably support the hub 11 in the axis direction when the upper swing structure swivels against the lower driving structure.

Since the material of the planar thrust bearing 18 is the same as the material of the planar thrust bearing 15 that has self-lubrication according to the first embodiment, the detailed description thereof will be omitted.

In this case, since the configuration, except for the planar thrust bearing 18 that is mounted on the rotational friction regions of the plate 17 of the shaft 13 and the hub 11, which are relatively rotated, to rotatably support the hub 11 in the axis direction when the upper swing structure swivels against the lower driving structure, is substantially the same as the configuration of the swivel joint according to the first embodiment of the present invention, the detailed explanation of the configuration and the operation thereof will be omitted, and the same reference numerals are used for the same configurations.

Hereinafter, a use example of a swivel joint for a construction machine according to a second embodiment of the present invention will be described in detail with reference to the accompanying drawings.

As shown in Fig. 4, the hub 11 and the shaft 13 of the swivel joint, which are relatively rotated, are mounted on the upper swing structure and the lower driving structure of the excavator. Through this, when the upper swing structure swings against the lower driving structure through driving of a swing device (not illustrated) that includes a swing motor, the hub 11 and the shaft 13 are relatively rotated. In this case, the planar thrust bearing 18, which is mounted on the hub 11 to come in friction contact with the plate 17 that is integrally fixed to the shaft 13, is rotated in a body with the hub 11. Accordingly, the hub 11 is rotatably supported in the axis direction by the planar thrust bearing 18 mounted on the hub 11 to come in rotational friction contact with an upper surface of the plate 17 of the shaft 13.

### INDUSTRIAL APPLICABILITY

As apparent from the above description, according to the swivel joint for a construction machine according to the embodiments of the present invention, when the shaft and the hub constituting the swivel joint are relatively rotated, the rotational friction region is supported by the planar thrust bearing, and thus the stable rotation thereof can be secured even if partial abnormal contact is made or even under unstable working conditions. Further, even in the case where the equipment is used for a long time, noise occurrence due to direct frictional contact between the metals is suppressed, and thus the durability of the swivel joint can be increased to heighten the operating ratio of the equipment.

## Claims

1. A swivel joint for a construction machine that is used to connect hydraulic pipes which supply a flow rate from a hydraulic pump mounted on an upper swing structure that swivels against a lower driving structure to components such as a traveling motor and a steering cylinder mounted on the lower driving structure, the swivel joint comprising:
a hub mounted on any one of the lower driving structure and the upper swing structure and provided with a hydraulic fluid movement port formed thereon;
a shaft mounted on the other of the lower driving structure and the upper swing structure and rotatably coupled to the hub, the shaft having a hydraulic fluid movement path formed in an axis direction to communicate with the port of the hub; and
a planar thrust bearing mounted on a cover that is integrally fixed to the hub on an upper side of the shaft to rotate in a body with the hub when the upper swing structure swivels against the lower driving structure and to be in frictional contact with an upper surface of the shaft to rotatably support the shaft in the axis direction.

2. A swivel joint for a construction machine that is used to connect hydraulic pipes which supply a flow rate from a hydraulic pump mounted on an upper swing structure that swivels against a lower driving structure to components such as a traveling motor and a steering cylinder mounted on the lower driving structure, the swivel joint comprising:
a hub mounted on any one of the lower driving structure and the upper swing structure and provided with a hydraulic fluid movement port formed thereon;
a shaft mounted on the other of the lower driving structure and the upper swing structure and rotatably coupled to the hub, the shaft having a hydraulic fluid movement path formed in an axis direction to communicate with the port of the hub; and
a planar thrust bearing mounted on the hub so as to be in frictional contact with a plate that is integrally fixed to a lower side of the shaft and to rotatably support the hub in the axis direction when the upper swing structure swivels against the lower driving structure.

3. The swivel joint according to claim 1, wherein the planar thrust bearing is formed of an oil-impregnated sintered metal material.

4. The swivel joint according to claim 1, wherein the planar thrust bearing is formed of an oil-impregnated plastic material.

5. The swivel joint according to claim 1, wherein the planar thrust bearing is formed of a bronze metal material.

6. The swivel joint according to claim 1, wherein the planar thrust bearing is formed of a combination of a bronze metal material and a graphite material.

7. The swivel joint according to claim 2, wherein the planar thrust bearing is formed of an oil-impregnated sintered metal material.

8. The swivel joint according to claim 2, wherein the planar thrust bearing is formed of an oil-impregnated plastic material.

9. The swivel joint according to claim 2, wherein the planar thrust bearing is formed of a bronze metal material.

10. The swivel joint according to claim 2, wherein the planar thrust bearing is formed of a combination of a bronze metal material and a graphite material.
